# EUROPEAN PATENT APPLICATION

(11) **EP 1 369 046 A1**
(43) Date of publication of application: **10.12.2003**
(21) Application number: 03076679.4
(22) Date of filing: 30.05.2003
(51) Int. Cl.: A23N 15/08

(54) **Machine for peeling bulbs**

(30) Priority: 03.06.2002 NL 1020743
(71) Applicant: Schouten Landbouwwerktuigen B.V., 8263 AA Kampen (NL)
(72) Inventor: Staring, Michael Johannes, 8312 BC Creil (NL); Poppe, Cornelis Pieter Johannes, 8312 BC Creil (NL)
(74) Representative: Ferguson, Alexander

(57) **Abstract**

Device (1) for peeling bulbs, such as bulbous plants and tuberous plants, comprising a frame (2), a number of sets of parallel peeling rollers (12) placed adjacently in the frame (2) to form a substantially straight dynamic support surface (4) for the bulbs, and means for reciprocal driving of the peeling rollers (12) for rotation about their centre lines, the drive means (5) comprising an own drive for each set of peeling rollers (12).

## Description

The invention relates to a machine for peeling bulbs, such a bulbous plants, tuberous plants and the like.

It is known to peel bulbs by placing the bulbs on a support surface consisting of elongated rollers, comprising a number of reciprocally driven rollers and a number of freely rotating intermediate rollers placed in between them and below them. The driven rollers are driven by a common electro motor, on the exit shaft of which a first drive wheel has been arranged, on which a rod with hinge ends has been attached. The end of the rod with hinge ends is attached to a second drive wheel, which is toothed at the circumference for driving a transmission chain. Said chain runs over a number of small toothed wheels, that are each solid with a larger toothed wheel, about which a toothed belt circulates. With this toothed belt a set of peeling rollers is driven.

When driving the first drive wheel the rod with hinge ends will reciprocally move the second drive wheel, over a limited distance. As a result the transmission chain and the teeth are each time loaded at the same locations. The chain is therefore regularly moved, to which end mounting operations are necessary. The teeth however, remain locally heavily loaded, as a result of which the second drive wheel has to be replaced regularly.

The drive of the known device, particularly the portion between the first drive wheel and the larger toothed wheels, require much lubrication and maintenance. The known device produces a lot of noise when operative.

These drawbacks become larger the more rollers the device has been equipped with.

It is an object of the invention to improve on this.

It is a further object of the invention to provide a device for peeling bulbs which allows more possibilities in use.

Another object of the invention is to provide a device for peeling bulbs that can easily be extended.

From one aspect the invention to that end provides a device for peeling bulbs, such as bulbous plants and tuberous plants, comprising a frame, a number of sets of parallel peeling rollers placed adjacently in the frame to form a substantially straight dynamic support surface for the bulbs, and means for reciprocal driving of the peeling rollers for rotation about their centre lines, the drive means comprising an own drive for each set of peeling rollers.

The drive for the peeling rollers is simpler due to the absence of the link between a central drive and the sets of peeling rollers. As a result not only the noise production, the wear and tear and necessary maintenance is reduced, but a lighter machine is obtained as well. Furthermore there is more freedom in adjusting the drives, because the limitation in the reciprocal movement is no longer there. The drive can then be adjusted to the specific bulbous product. The movement in the one direction can then also be made different from the movement in the other direction.

A further advantage of the independence in the drive of the sets of peeling rollers is that the machine can more simply be expanded: after all there are no longer any central transmission means, whereas it is not of importance either whether the central motor offers sufficient power for an extension.

Preferably the drives comprise electro motors. The drives preferably each comprise their own drive belt forming a direct connection between the motor and the set of peeling rollers. In this way a simple own drive of the sets of peeling rollers has been obtained.

The drive is further simplified when the drive belt engages a pulley on the exit shaft of the electro motor in question.

The drive belts may be formed in various manners, but are preferably formed by a toothed belt.

The drive is further kept simple when the peeling rollers are provided with a pulley which is concentric with their centre line, which pulley is in engagement with the drive belt.

The bulb peeling device according to the invention can be made to custom in a simple way, for instance having three, four or five sets of peeling rollers. It is advantageous here when a set of peeling rollers forms a module with their own drive, which module can be placed separately in the frame.

Said adjustment is further enhanced when the number of peeling rollers in each set is equal.

From another aspect the invention provides a device for peeling bulbs, comprising a frame, a number of parallel peeling rollers placed adjacently in the frame to form a dynamic support surface for the bulbs, and means for driving the peeling rollers for rotation about their centre lines, the peeling rollers and the drive means being subdivided into units each comprising their own motor with drive belt for direct drive of the peeling rollers.

The invention furthermore provides an assembly of a number of peeling rollers and their own drive, adapted as modular building unit for accommodation in a device according to the invention.

The invention will be elucidated on the basis of the exemplary embodiment shown in the attached drawings, in which:
Figure 1 shows a front view of a bulb peeling device according to the invention; and
Figure 2 schematically shows the drive of the device of figure 1.

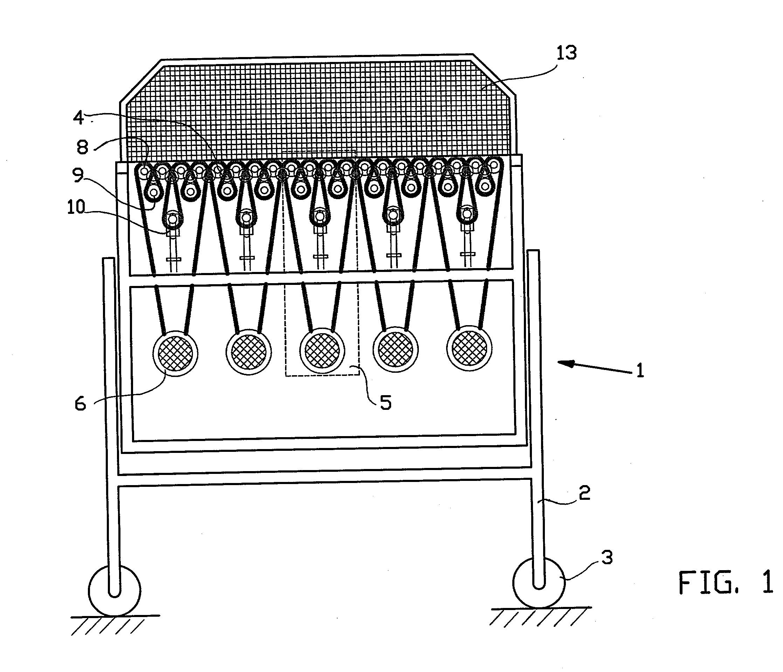

The bulb peeling device 1 shown in figure 1 comprises a frame, that is supported in a mobile manner by wheels 3. On top of the frame 2 a cage 13 is placed, which upwardly shields a support surface 4 for bulbs to be peeled. The length of the device 1 may be approximately 1.5 m.

The support surface 4 is among others formed by a series of driven elongated rollers 12, which at one end have been provided with toothed pulleys 8.

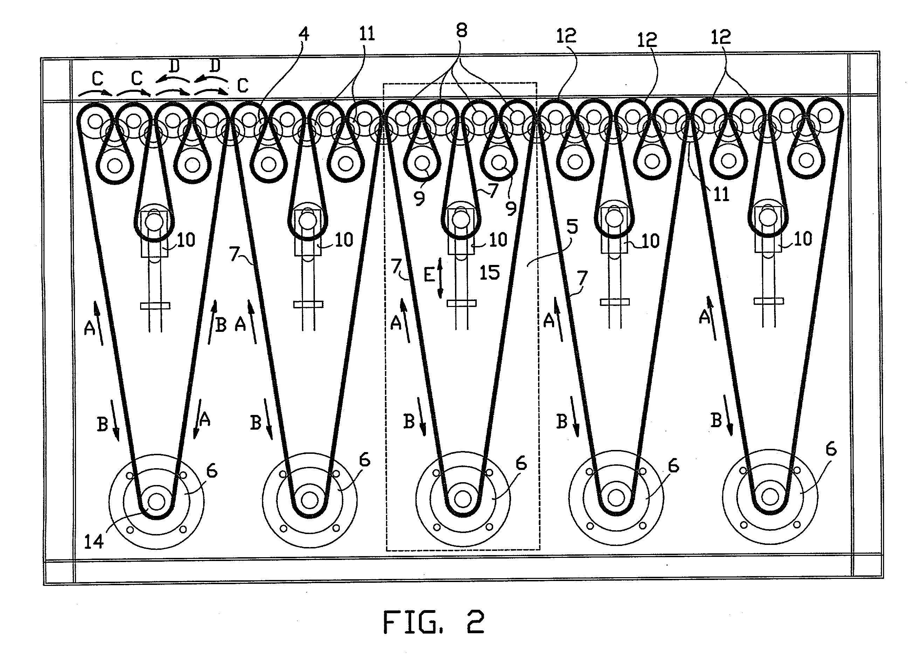

As can be seen in figure 2 freely rotatable rollers 11 have been placed between and below the driven rollers 12, which rollers 11 are driven by the driven rollers 12 and with the driven rollers 12 define the straight support surface 4 forming a horizontal bed for the bulbs to be peeled. Freely rotatable rollers 11 have also been placed between the assemblies 5, between its adjacently situated peeling rollers 12.

The surface of the peeling rollers 12 of the freely rotatable rollers 11 can be adjusted, adapted to the crop.

For driving the pulleys 8 and thus the rollers 12 an own drive system 5 has been provided per group of rollers 12 in this case four. Between the units 5 a freely rotatable roller 11 has been positioned. The units 5 have for instance been positioned at a centre to centre distance of 0.25 m from each other.

Each drive system 5 comprises an electro motor 6 having a toothed pulley 14 on the exit shaft. The elector motor 6 is placed almost centrally below the rollers 12 accommodated in the unit in question. The transmission between the toothed pulley 14 and the toothed pulleys 8 takes place by means of a toothed belt 7, which between the toothed pulleys 8 is guided about rollers 9, as well as about a centrally situated tensioning roller 10, which by means of adjustment part 15 can be adjusted in the direction E to set the toothed belt 7 at the correct tension.

Each electro motor 6 may for instance have a power of approximately 1 kW. The motors 6 are reversible. In a central control unit a frequency adaptor/regulator? has been provided, for letting the motors move at for instance a frequency of 150/minute.

The electro motors 6 are commonly geared to one another, particularly equally, controllably adjustable by the central control unit. The central control unit can also be set (operation panel 14), to for instance be driven longer in the one direction than in the other direction. As a result the location of engagement of the toothed wheel 7 will be moved again and again.

The control unit 13 controls the motors 6 to cause the rollers 12 of adjacent units 5 at a same speed, so that the intermediately placed, freely rotatable roller 11 is driven at equal speed by the rollers 12 adjacent to it.

During use the bulbs are laid on the support surface 4, and the electro motors 6 are reciprocally brought into drive, so that the toothed belt 7 is alternatingly moved in the direction A and in the direction B. The toothed pulleys 8 are as a result alternatingly driven in the direction C and D, and thus the rollers 12. The rollers 12 here exert a peeling activity on the supported bulbs.

By experiment it can be established what the optimal speed and reversing frequency is for the best result of a certain bulb.

The accelerations of the peeling rollers that can be achieved may in comparison with the known machine be much larger, so that the peeling rollers per unit of time are able to rotate longer at a maximum speed and the peeling is more effective. Possibly the duration of the maximum peeling roller speed can be adjusted as desired.

The building of the device 1 is simple because the frame is easy to adapt to the number of drive systems 5. Alternatively it is possible to couple an existing device to one or more modules with drive systems 5, possibly in own frames that can be coupled to each other, with the intermediate placing of a freely rotatable roller 11.

## Claims

1. Device for peeling bulbs, such as bulbous plants and tuberous plants, comprising a frame, a number of sets of parallel peeling rollers placed adjacently in the frame to form a substantially straight dynamic support surface for the bulbs, and means for reciprocal driving of the peeling rollers for rotation about their centre lines, the drive means comprising an own drive for each set of peeling rollers.

2. Device according to claim 1, the drives comprising electro motors.

3. Device according to claim 1 or 2, the drives each comprising their own drive belt forming a direct connection between the motor and the set of peeling rollers, the drive belt preferably engaging a pulley on the exit shaft of the motor in question.

4. Device according to claim 4, the drive belt being a toothed belt.

5. Device according to claim 3 or 4, the peeling rollers being provided with a pulley which is concentric with their centre line, which pulley is in engagement with the drive belt.

6. Device according to any one of the preceding claims, each set of peeling rollers forming a module with their own drive, which module can be placed separately in the frame.

7. Device according to any one of the preceding claims, the number of peeling rollers in each set being equal.

8. Device for peeling bulbs, such as bulbous plants or tuberous plants, comprising a frame, a number of parallel peeling rollers placed adjacently in the frame to form a substantially straight, dynamic support surface for the bulbs, and means for reciprocal driving the peeling rollers for rotation about their centre lines, the peeling rollers and the drive means being subdivided into units each comprising their own motor with drive belt for direct drive of the peeling rollers.

9. Device according to any one of the preceding claims, comprising a central control unit for mutual adjusted control of the drives of the sets of peeling rollers, and with means for setting the control unit at a selected control.

10. Device according to any one of the preceding claims, freely rotatable rollers being placed between the peeling rollers within each set of peeling rollers.

11. Device according to any one of the preceding claims, a freely rotatable roller being placed between the peeling rollers of adjacently placed sets of peeling rollers.

12. Assembly of a number of peeling rollers and their own drive, adapted as modular building unit for accommodation in a device according to any one of the preceding claims.
